# EUROPÄISCHE PATENTSCHRIFT

(11) **EP 1 062 121 B1**
(45) Veröffentlichungstag und Bekanntmachung des Hinweises auf die Patenterteilung: **05.06.2002**
(21) Anmeldenummer: 99907523.7
(22) Anmeldetag: 09.02.1999
(51) Int. Cl.: B60Q 1/52, B60Q 1/48, G01S 13/93

(54) **ANZEIGEEINRICHTUNG IN EINEM KRAFTFAHRZEUG**
DISPLAY DEVICE IN A MOTOR VEHICLE
DISPOSITIF D'AFFICHAGE DANS UN VEHICULE AUTOMOBILE

(30) Priorität: 14.03.1998 DE 19811161
(43) Veröffentlichungstag der Anmeldung: 27.12.2000
(73) Patentinhaber: Volkswagen Aktiengesellschaft, 38436 Wolfsburg (DE)
(72) Erfinder: ANDERS, Peter, D-38543 Hillersee (DE)
(74) Vertreter: Meyer, Enno, Dr.
(86) Internationale Anmeldenummer: EP9900830
(87) Internationale Veröffentlichungsnummer: WO9947382

(56) Entgegenhaltungen:
- EP-A- 0 429 990
- WO-A-89/04266
- FR-A- 2 716 145
- GB-A- 2 298 754

## Beschreibung

Die Erfindung betrifft ein Kraftfahrzeug, gemäß Oberbegriff des Patentanspruches 1.

Eine derartige Anzeigeeinrichtung ist beispielsweise aus der Deutschen Offenlegungsschrift DE 4410617 A 1 bekannt. Dort ist im Rahmen einer Überwachungseinrichtung für ein Kraftfahrzeug mit im Heckbereich angeordneten Abstandssensoren, eine Anzeigeeinrichtung offenbart, welche das Rückwärtseinparken durch die Angabe des Abstandes zum hinteren Fahrzeug oder Gegenstand erleichtem soll. Die optische Anzeigeeinheit der Überwachungseinrichtung ist in die Bremsleuchte eingebaut, welche als dritte Bremsleuchte im Fahrgastraum d.h. im Heckscheibenbereich angeordnet ist. Dabei ist die Anzeigeeinrichtung auf der besagten Bremsleuchtenarmatur oder dem -gehäuse derart plaziert, daß sie dem Fahrgastinnenraum zugewandt ist. Dies ermöglicht, daß die Anzeige von innen einsehbar ist.

Außerdem wird in der europäischen Patentanmeldung EP 429 990 A2 eine Einrichtung zur Anzeige des Abstandes eines Lastkraftwagens zu einer Laderampe offenbart. Die Laderampe ist dazu mit einem Abstandssensor ausgestattet, der den Abstand zwischen dem rückwärtigen Ende des Lastkraftwagens und einem Referenzpunkt oder der Oberfläche eines an der Laderampe angebrachten Anschlagpuffers erfaßt. Der gemessene Abstand wird auf einer Anzeigeeinrichtung dargestellt, welche ebenfalls an der Laderampe angeordnet ist, wobei die Anzeigeeinrichtung derart plaziert ist, daß der Fahrer das Anzeigebild in dem an der Fahrerseite angeordneten Außenspiegel des Lastkraftwagens einsehen kann.

GB 2 298 754 offenbart eine in einem Kraftfahrzeug angeordnete Einrichtung zum Anzeigen des Abstands zu einem vorderen und hinteren Objekt, wobei die Einrichtung eine im vorderen Armaturenbrett angeordnete vordere Anzeigevorrichtung aufweist, die den Abstand nach vorne anzeigt, und eine oberhalb des Rückfensters angeordnete hintere Anzeige aufweist, die den Abstand beim Rückwärtsfahren anzeigt. Nachteilig ist hier die Verwendung zweier Anzeigevorrichtungen, die entsprechende Kosten verursachen.

Es besteht ein grundsätzlicher Informationsbedarf für den Fahrzeugführer über alle Betriebssituationen und Betriebsdaten des Fahrzeuges. Aufgrund der Fülle der anfallenden Signale oder Informationen stellt es ein grundsätzliches Problem dar, dieselben in einer Weise dem Fahrer zugänglich zu machen, daß die Aufmerksamkeit auf den Straßenverkehr nicht geschmälert wird, d.h., Instrumente und Anzeigen sollten sich grundsätzlich im betriebsüblichen Blickfeld des Fahrzeugführers befinden.

Der Erfindung liegt somit die Aufgabe zugrunde, eine gattungsgemäßes Kraftfahrzeug zu schaffen, mit deren Hilfe dem Fahrzeugführer leicht aufnehmbar Informationen in unterschiedlichen Fahrsituationen im betriebsüblichen Blickfeld des Fahrzeugführers angezeigt werden.

Diese Aufgabe wird erfindungsgemäß durch die Merkmale des Anspruchs 1 gelöst.

Weitere vorteilhafte Ausgestaltung der Erfindung sind in den abhängigen Ansprüchen angegeben.

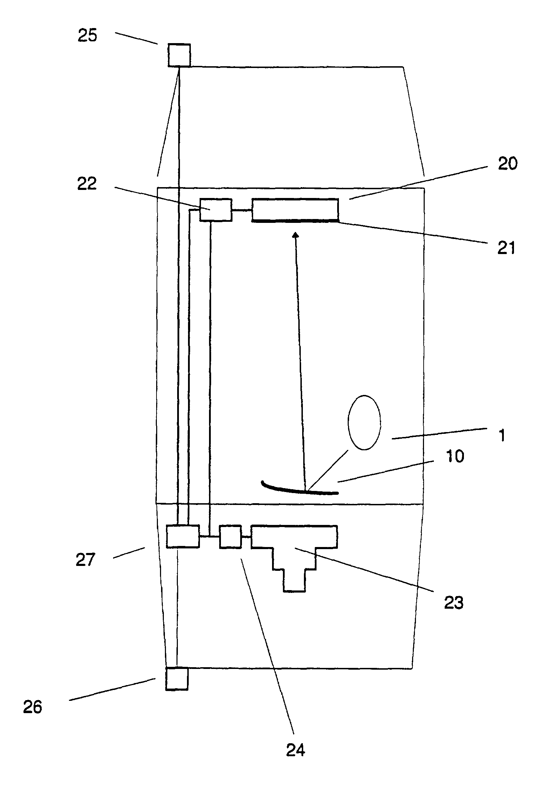

Die Erfindung ist in der Zeichnung dargestellt und nachfolgend näher beschrieben. Die Abbildung zeigt nur prinzipiell die Ausrichtung der Anzeigeausrichtung zum Innenrückspiegel 10 des nur schematisch dargestellten Fahrzeuges. Innerhalb der Fahrgastzelle stellt der jeweilige Fahrzeugführer 1 den Innenspiegel 10 ohnehin auf eine freie Sicht nach hinten ein. Die Anzeigeeinrichtung 21 kann dabei vorteilhafterweise auf der nach innen in den Fahrgastraum weisenden Außenfläche der sogenannten dritten Bremsleuchte 20 plaziert sein. Weitere Möglichkeiten sind die Anzeige in die Hutablage oder im Heckscheibenbereich zu plazieren. In jedem dieser Fälle ist gewährleistet, daß der nach hinten geräumig abbildende Innenrückspiegel 10 die Anzeige 21 gleichzeitig ins Blickfeld des Fahrzeugführers führt.

Da der Fahrer während des normalen Fahrbetriebes, wie oben bereits ausgeführt, ohnehin grundsätzlich temporär auch in den Raum hinter dem Fahrzeug blickt, um beispielsweise bei Überholvorgängen herannahende Fahrzeuge bereits aus der Feme sehen zu können, wird durch die optische Kopplung der Anzeige mit dem Innenrückspiegel eine gängige Blickposition des Fahrzeugführers für eine weitere Anzeige genutzt. Da der besagte Blick nach hinten demnach ohnehin obligatorisch ist, wird durch die Einsichtnahme der dadurch einsehbaren Anzeige auch keine Gefährdung durch Ablenkung herbeigeführt, da sie sich im Blickfeld befindet. Dadurch, daß die Anzeige beim Vorwärtsbetrieb des Fahrzeuges spiegelverkehrt lesbar generiert wird, wird über den Blick in den Innenrückspiegel diese Anzeige dann für den Fahrzeugführer wieder normal lesbar. D.h., beim Vorwärtsbetrieb wird die Anzeige in der Anzeigefläche 21 bewußt spiegelverkehrt generiert, damit der Fahrzeugführer 1 zur Einsichtnahme der Anzeige nicht den Kopf dreht, sondern grundsätzlich dies zwanghaft über den Innenrückspiegel 10 tut und gleichzeitig den obligatorischen Blick nach hinten hat. Lediglich wenn sich das Fahrzeug nach hinten bewegt, also rückwärts gefahren oder gerollt wird, ist der Blick nach hinten ebenso obligatorisch. Zur Erhöhung der Sicherheit wird dabei empfohlen, grundsätzlich nur mit einem auch nach hinten gewendeten Kopf rückwärts zu fahren, um "Tote-Winkel-Effekte" auszuschalten. Da die Anzeigengenerierung fahrtrichtungsabhängig ist und bei Rückwärtsfahrt von spiegelverkehrter Darstellung in normal lesbarer Darstellung umgeschaltet wird, muß der Fahrzeugführer beim Zurücksetzen den Kopf auch tatsächlich nach hinten wenden. Dabei kann die Anzeigeneinrichtung während des Einparkens beispielsweise den Abstand durch Abstandssensoren 26 vorne und 25 hinten zum stehenden Fahrzeug, auf welches man zufährt, anzeigen.

Die fahrtrichtungsabhängige Umschaltung der Anzeige ist durch eine sensorische Kopplung zwischen Getriebe 23 und elektronischen Mitteln 22 gegeben. Im Normalbetrieb in Fahrtrichtung kann die Anzeigeeinrichtung beispielsweise zur Anzeige von Fahrdaten oder von solchen Daten verwendet werden, die den Raum nach hinten betreffen, wie beispielsweise Abstand des nachfolgenden Fahrzeuges, durch den Abstandssensor 25 hinten Überholabsicht, Relativgeschwindigkeit, und dergleichen mehr.

So kann die Anzeigefläche auch mit der Anzeige von Abstandsdaten aus der Abstandsregelung 27 beaufschlagbar sein.
Insgesamt ergibt sich damit der Vorteil, daß sowohl für die Absicherung nach hinten, als auch die Absicherung in Fahrtrichtung eine gemeinsame Anzeigeeinrichtung verwendet wird. Überdies wird, wie oben bereits ausgeführt, ein weiterer, im Fahrbetrieb ohnehin obligatorischer Sichtfeldbereich des Fahrers ausgenutzt, um ihm weitergehende Informationen zukommen zu lassen, ohne daß er von der Fahrbahnsituation als solches sichtmäßig abgelenkt würde.

Für den besonderen Einsatzfall kann die Umschaltung, die von spiegelverkehrter auf normal lesbare Darstellung umschaltet, durch ein Schaltelement 24 abschaltbar sein, beispielsweise derart, daß auch beim Rückwärtsfahren die Anzeigeeinrichtung spiegelverkehrt anzeigt, so daß die besagte Anzeige auch in diesem Fall nur durch den Innenrückspiegel normal lesbar ist. Dies kann insbesondere dann vorteilhaft sein, wenn der Fahrzeugführer eine behinderte Person ist, die beispielsweise den Kopf nicht oder nicht vollständig wenden kann. Für solche Personen ist eine solche Abschaltung zwischen spiegelverkehrter und normal lesbarer Anzeigengenerierung vorteilhaft, wobei diese Personen im Rückwärtseinparken mit ausschließlicher Spiegelbenutzung ohnehin geübter sind als andere.

## Patentansprüche

1. Kraftfahrzeug mit einer in dem Kraftfahrzeug hinter dem Kraftfahrzeugführer (1) angeordneten Anzeigeeinrichtung, wobei die Anzeigefläche (21) im Innenraum des Kraftfahrzeugs in Richtung auf den Fahrzeugführer (1) zu angeordnet ist und der Anzeigeeinrichtung elektrisch/elektronische Ansteuermittel (22) zu ihrer Betätigung funktional zugeordnet sind wobei die Anzeigefläche (21) derart im Fahrgastraum plaziert ist, dass dieselbe vom Fahrzeugführer (1) über den Innenrückspiegel (10) einsehbar ist, **dadurch gekennzeichnet, daß** die Anzeige auf der Anzeigefläche (21) spiegelverkehrt generiertbar ist, wobei fahrtrichtungsabhängig bzw. vom eingelegten Gang des Getriebes (23) abhängig, die Anzeige spiegelverkehrt oder normal lesbar generiert wird.

2. Kraftfahrzeug nach Anspruch 1, **dadurch gekennzeichnet, daß** die fahrtrichtungsabhängige Umschaltung zwischen spiegelverkehrter und normal lesbar Anzeigengenerierung durch ein Schaltelement (24) aufhebbar bzw. abschaltbar ist.

3. Kraftfahrzeug nach einem oder mehreren der vorangegangenen Ansprüche, **dadurch gekennzeichnet, daß** die Anzeigeeinrichtung bzw. deren elektrische/elektronische Ansteuermittel (22) mit einer Abstandsregelung (27) zur Anzeige des Abstandes zum vorausfahrenden bzw. nachfolgenden bzw. stehenden Fahrzeug verbunden ist.

4. Kraftfahrzeug nach einem oder mehreren der vorhergehenden Ansprüche, **dadurch gekennzeichnet, daß** die Anzeigeeinrichtung bzw. deren elektrische/elektronische Ansteuermittel (22) mit fahrbetriebsbezogenen Sensoren (25, 26) zur Anzeige von Fahrdaten verbunden ist.

5. Kraftfahrzeug nach einem oder mehreren der vorhergehenden Ansprüche, **dadurch gekennzeichnet, daß** die Anzeigeeinrichtung bzw. deren elektrische/elektronische Ansteuermittel (22) mit der Getriebeeinrichtung (23) des Fahrzeuges derart verschaltet ist, daß bei Einlegen des Rückwärtsganges die Anzeige von spiegelverkehrter Darstellung auf normal lesbare Darstellung umschaltet.

6. Kraftfahrzeug nach einem oder mehreren der vorhergehenden Ansprüche, **dadurch gekennzeichnet, dass** die Anzeigefläche (21) bzw. die einzelnen Anzeigensegmente beleuchtet und damit auch bei Dunkelheit sichtbar sind.

## Claims

1. A motor vehicle comprising a display device which is arranged in the motor vehicle behind the motor vehicle driver (1), wherein the display surface (21) is arranged in the interior of the motor vehicle towards the vehicle driver (1) and electrical/electronic actuating means (22) are functionally associated with the display device for operation thereof, wherein the display surface (21) is placed in the passenger compartment in such a way that same can be viewed by the vehicle driver (1) by way of the interior rear view mirror (10), **characterised in that** the display can be generated on the display surface (21) in mirror-reversed relationship, wherein the display is generated in mirror-reversed relationship or in such a way as to be normally readable in dependence on the direction of travel or the engaged gear of the transmission (23).

2. A motor vehicle according to claim 1 **characterised in that** switching over between mirror-reversed and normally readable display generation, in dependence on the direction of travel, can be nullified or taken out of action by a switch element (24).

3. A motor vehicle according to one or more of the preceding claims **characterised in that** the display device or the electrical/electronic actuating means (22) thereof is connected to a distance regulating means (27) for displaying the distance in relation to the preceding or following or stationary vehicle.

4. A motor vehicle according to one or more of the preceding claims **characterised in that** the display device or the electrical/electronic actuating means (22) thereof is connected to travel mode-related sensors (25, 26) for displaying travel data.

5. A motor vehicle according to one or more of the preceding claims **characterised in that** the display device or the electrical/electronic actuating means (22) thereof is wired to the transmission unit (23) of the vehicle in such a way that when reverse gear is engaged the display switches over from a mirror-reversed representation to a normally readable representation.

6. A motor vehicle according to one or more of the preceding claims **characterised in that** the display surface (21) or the individual display elements are lit and are thus visible even in the dark.

## Revendications

1. Véhicule automobile comportant un dispositif d'affichage, qui est disposé dans le véhicule automobile derrière le conducteur (1) du véhicule, la surface de présentation (21) étant située à l'intérieur du véhicule automobile en direction du conducteur de véhicule (1), et des moyens de commande électriques/électroniques (22) étant associés de manière fonctionnelle au dispositif d'affichage pour l'actionnement de celui-ci, tandis que la surface de présentation (21) est située de telle manière dans l'espace intérieur qu'elle puisse être vue par le conducteur de véhicule (1) par l'intermédiaire du rétroviseur intérieur (10), **caractérisé en ce que** l'indication apparaissant sur la surface de présentation (21) peut être produite à inversion spéculaire de telle sorte que, en fonction du sens de la marche ou bien en fonction de la vitesse/marche sélectionnée de la boîte de vitesses (23), l'indication soit produite de manière à pouvoir être lue normalement ou avec une inversion spéculaire.

2. Véhicule automobile selon la revendication 1, **caractérisé en ce que** la commutation, qui s'effectue en fonction du sens de la marche, entre la génération d'une indication lisible normalement ou avec inversion spéculaire, peut être supprimée ou bien déclenchée au moyen d'un élément de commutation (24).

3. Véhicule automobile selon l'une ou plusieurs des revendications précédentes, **caractérisé en ce que** le dispositif d'affichage ou bien ses moyens de commande électriques/électroniques (22) est ou sont relié(s) à une régulation des espacements entre véhicules (27) afin d'indiquer la distance par rapport à un véhicule qui roule devant ou bien derrière ou qui est arrêté.

4. Véhicule automobile selon l'une ou plusieurs des revendications précédentes, **caractérisé en ce que** le dispositif d'affichage ou bien ses moyens de commande électriques/électroniques (22) est ou sont relié(s) à des capteurs (25, 26) associés au fonctionnement du véhicule, pour l'affichage de données sur la marche du véhicule.

5. Véhicule automobile selon l'une ou plusieurs des revendications précédentes, **caractérisé en ce que** le dispositif d'affichage ou bien ses moyens de commande électriques/électroniques (22) est ou sont associé(s) au dispositif de boîte de vitesses (23) du véhicule de telle sorte que, lors de la mise en marche arrière, l'affichage passe de la présentation à inversion spéculaire à la présentation à lecture normale.

6. Véhicule automobile selon l'une ou plusieurs des revendications précédentes, **caractérisé en ce que** la surface de présentation (21) ou bien les segments indicateurs individuels sont éclairés et, par conséquent, visibles également dans l'obscurité.
